# EUROPEAN PATENT SPECIFICATION

(11) **EP 1 621 428 B1**
(45) Date of publication and mention of the grant of the patent: **15.12.2010**
(21) Application number: 05015452.5
(22) Date of filing: 15.07.2005
(51) Int. Cl.: B60S 3/04, B60S 3/00, B60S 3/06

(54) **Car wash installation and corresponding process**
Kraftfahrzeugwaschanlage sowie entsprechendes Verfahren
Installation de lavage de voiture et méthode correspondante

(30) Priority: 27.07.2004 IT PC20040029; 07.09.2004 IT PC20040033
(43) Date of publication of application: 01.02.2006
(73) Proprietor: Autoequip Lavaggi S.p.A., 14059 Vesime (AT) (IT)
(72) Inventor: Brusco, Mauro, 12074 Perletto (CN) (IT); Giamello, Angelo, 12050 Castino (CN) (IT); Molinari, Roberto, 14050 Cessole (AT) (IT); Marengo, Ferruccio, 14054 Bubbio (AT) (IT)
(74) Representative: Minoja, Fabrizio

(56) References cited:
- EP-A2- 0 987 156
- GB-A- 1 291 050
- US-A1- 2002 144 366

## Description

This invention relates to a double-gantry car wash installation wherein at least one of said gantries is a split gantry, comprising a motor-driven first part or main structure on which some of the washing devices are mounted, and a second towed part on which high-pressure water-spraying devices are mounted. Said second part is connected to the main structure via mechanical systems which enable the two parts to approach one another when they move in one direction and move apart during the return stroke, or vice versa. This solution shortens the time of the washing cycle compared with known installations, and also reduces the overall size of the installation.

According to the invention, the split gantry is the "drying" gantry, which is fitted, among other things, with systems designed to direct a jet of air onto the vehicle to dry it; according to the invention the split gantry is the "washing" gantry, which is fitted with brushes that perform mechanical washing of the vehicle, and with vehicle rinsing systems.

Vehicle washing installations, and especially car washes, are divided into two main categories: fixed-gantry installations, constituted by a tunnel along which the car advances and inside which the various washing systems are located; and mobile-gantry installations, in which the vehicle remains stationary while the supporting structure of the washing systems moves forwards and backwards to perform the various operations included in the washing cycle. The present invention relates to this second type of car wash.

Mobile-gantry car washes are divided into two main categories, namely single-gantry and multiple-gantry installations.

In single-gantry installations, all the devices (rotary brushes, high-pressure water-spraying nozzles, wheel brushes, rinsing water spraying systems and drying units that direct pressurised air onto the vehicle) are mounted on the same gantry-shaped structure, which advances, bringing the various devices in succession to the vehicle to be washed. Said installations with a single mobile gantry have the advantage of being more compact than the others, but washing times are rather lengthy because the gantry must make at least six passes in order to perform all the specified operations.

The need for higher productivity has led to the study of solutions which shorten treatment cycles, so that more washes can be performed in a given period of time.

These studies have led to the introduction of double-gantry installations, which offer a considerable time saving because the vehicle washing cycle can begin while the drying devices on the separate gantry are drying the previously washed vehicle.

Double-gantry installations generally comprise a first structure, called the drying gantry, which carries emollient liquid spraying and distribution arches, top and side nozzles for spraying pressurised water, and drying devices that direct a strong jet of air onto the vehicle. The second gantry is equipped with rotary brushes that perform mechanical washing of the vehicle, and rinsing devices which spray rinsing water, wax or the like onto the vehicle.

In double-gantry systems, the cycle comprises:
- a first forward pass of the drying gantry, which sprays emollient onto the vehicle;
- a return pass with spraying of high-pressure washing water;
- a second forward pass in which both gantries move together, and the wheel washers and high-pressure water-spraying systems fitted to the drying gantry are activated, and
- a return pass of both gantries, with brushing followed by rinsing with water performed by the washing gantry, followed by a slow drying stage performed by the systems fitted to the drying gantry.

To shorten washing times even more, this applicant has already developed an installation covered by patent application IT 2003PC00048 of 29 October 2003, which discloses a double-gantry washing installation wherein the high-pressure water-spraying devices are located on the washing gantry rather than the drying gantry, as in known double-gantry systems.

GB-A-1.291.050 relates to a vehicle cleaning apparatus having rotatable brushes and spray means mounted on a movable gantry frame. A sub-frame is horizontally movably mounted on the gantry frame by means of a pair of projections, with air outlet nozzles mounted on the sub-frame and connected with fans mounted on the gantry frame, the movements of the gantry frame and sub-frame being controlled so that the gantry frame traverses a stationary vehicle being cleaned with the sub-frame at its nearest point to the gantry frame while washing takes place by means of the sprays and brushes, and then the sub-frame moves away from the gantry frame during its traverse in the opposite direction so that washing and drying may occur simultaneously. For automatic operation, a coin box may be attached to the sub-frame.

Although this solution is efficient, it has been found that it can be improved.

Studies conducted by the applicant have recently led to the development of a new double-gantry installation with the high-pressure water-spraying nozzles located between the drying systems and the brushes; this further improves the performance of these installations, which are also more compact.

These results are achieved, in accordance with the invention, by a double-gantry installation with the features of claim 1. This solution offers the advantages of double- or triple-gantry installations plus a smaller size, and faster washing operations.

This invention will now be described in detail, by way of example but not of limitation, by reference to the annexed figures wherein:
- figures 1 and 2 schematically illustrate the side view of a car-wash installation according to the invention, with a split gantry shown in the open and closed positions respectively;
- figure 3 shows a detail of the split gantry in cross-section;
- figures 4A and 4B schematically illustrate, in plan view, details of two embodiments of the split gantry in an installation according to the invention;
- figures 5a to 5i schematically illustrate the sequence of operations of a washing cycle performed by an installation according to the invention.

In the annexed figures, the installation according to the invention comprises a first gantry, or drying gantry, indicated as 1, and a second gantry, or washing gantry, indicated as 2.

All the systems and equipment needed to wash vehicles are fitted to gantries 1 and 2, as will be illustrated below.

A characteristic feature of the invention is that one of these gantries, in the case illustrated gantry 1, is split, and in particular is constituted by a motor-driven main gantry 3, and a non-motor-driven gantry structure or secondary gantry 4.

The latter is connected to main gantry 3 via mechanical systems which enable the two gantries to move apart during the pass in one direction and to move closer together during the pass in the opposite direction.

The gantries, fitted with wheels 30, run on tracks 31, between which the vehicle to be washed is positioned.

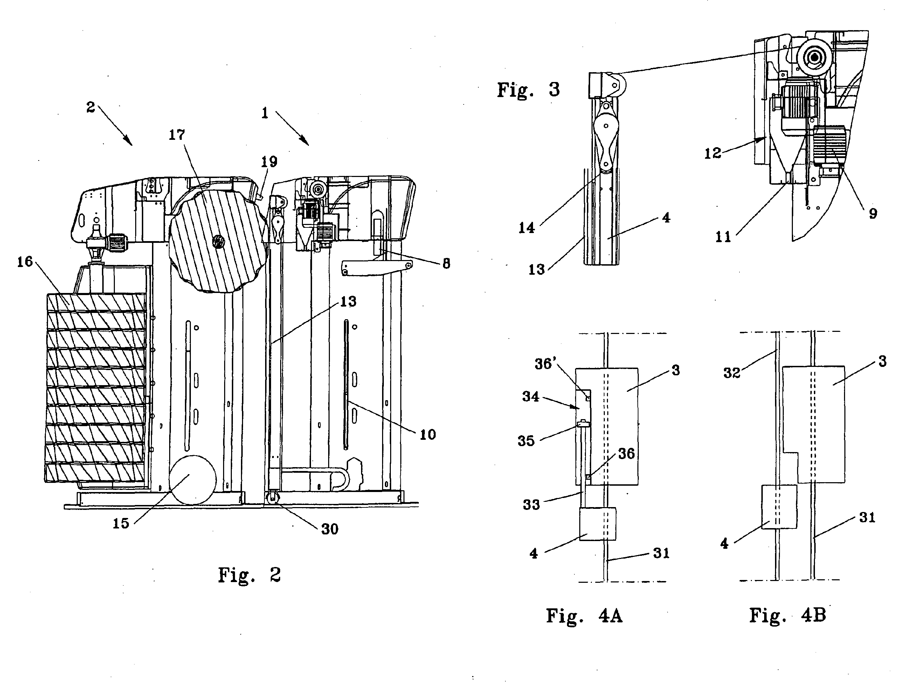

In particular gantries 3 and 4 can run on shared tracks, as in the case schematically illustrated in figure 4A, or on separate tracks 31 and 32, as shown in figure 4B.

As shown in figure 4A, one of gantries 3 and 4 (in the specific case illustrated, gantry 4) is integral on each side with at least one rigid arm 33 which slides in a seating 34 in the upright of associated gantry 3.

A stop means 35 is connected to arm 33; after the sliding of arm 33 said stop means engages a pair of end stops 36, 36' integral with the structure of gantry 3. Alternatively, stop means 35 can be attached to structure 3, and the adjustable end stops can be fitted to arm 33 which is always free to slide in seating 34, within the limits imposed by end stops 36 and 36'.

Advantageously, non-motorised gantry 4 could be fitted with a braking element (not illustrated) designed to prevent said gantry from being towed by motorised gantry 3 when the latter must move away from or towards gantry 4 at the start of the forward and return passes.

With this solution, gantry 3 is released from gantry 4 during the first section of the pass in one direction, and moves away from it, until stop means 35 engages one of end stops 36, 36'.

From that time, the two gantries move together, gantry 4 being towed by gantry 3 at a pre-set distance, depending on the length of arm 33 and the position of stop means 35 and end stops 36, 36'.

During the first section of the return pass, gantry 3 will move alone, until it is against gantry 4, which will then be pushed in the same direction with the two gantries moving together.

In the case of the solution with two tracks, gantry 4 may have dimensions such that it lies at least partly within the footprint of gantry 3, thus obtaining an assembly which is more compact as a whole.

In this case gantry 4 could have its own motor or be towed by gantry 3, with suitable modifications to the configuration of arm 33, which are easily within the reach of one skilled in the art.

The independent motor of gantry 4 would be more expensive, but allow the distance between the two gantries 3 and 4 to be varied as required.

According to a further alternative embodiment, arm 33 could be replaced by a tow cable connected to one of the two gantries and wound onto a reel mounted on the corresponding gantry.

During the movement in one direction, the motor-driven gantry will move away from the other gantry as the cable unwinds; the cable will then be rewound on the reel during the first section of the return pass, in which the motor-driven gantry moves towards gantry 4.

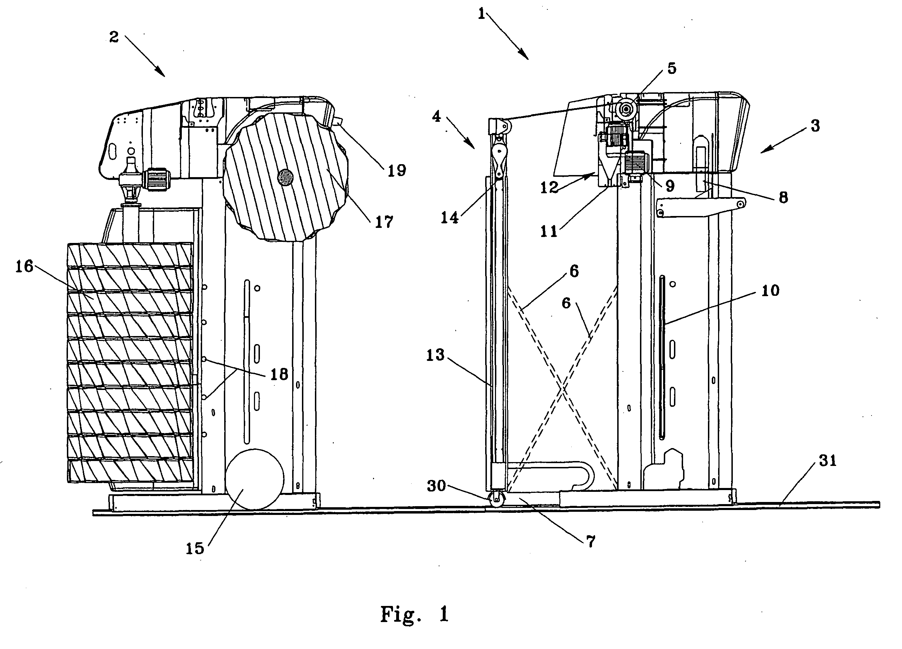

In accordance with a further preferred embodiment of the invention, the system of connection could be, for example, the pantograph type or comprise pairs of rods 6 hinged together, which slide along the gantry structures with a scissor movement, as shown in figures 1 and 2, so that the two gantries move towards and away from each other, or could be constituted by a telescopic arm 7 that connects structure 4 to gantry 3 at the base (both solutions are illustrated in figure 1, one of them with a broken line).

Gantry 1 is fitted with an arch 8 with nozzles for spraying an emollient, and means 9 designed to direct a jet of air towards side outlets 10 and towards a horizontal outlet slit 11, mounted on a structure 12 that slides along the uprights of the gantry.

A scanning device 20 not illustrated in the figure scans the contour of the vehicle and stores it in an electronic installation control system, not illustrated because it is of known type.

Secondary gantry 4 is fitted with devices designed to direct pressurised water towards the vehicle, through a series of lateral nozzles 13 and horizontal nozzles 14, the latter being mounted on a height-adjustable support controlled by the control system via a cable wound onto a pulley 5.

Washing gantry 2 is fitted with a pair of wheel washers 15, vertical rotary brushes 16 and horizontal rotary brushes 17, the latter also being mounted on a support which moves along the uprights of the gantry, controlled by the control unit of the installation, nozzles 18 for spraying washing products such as shampoo, etc., and nozzles 19 for spraying rinsing water.

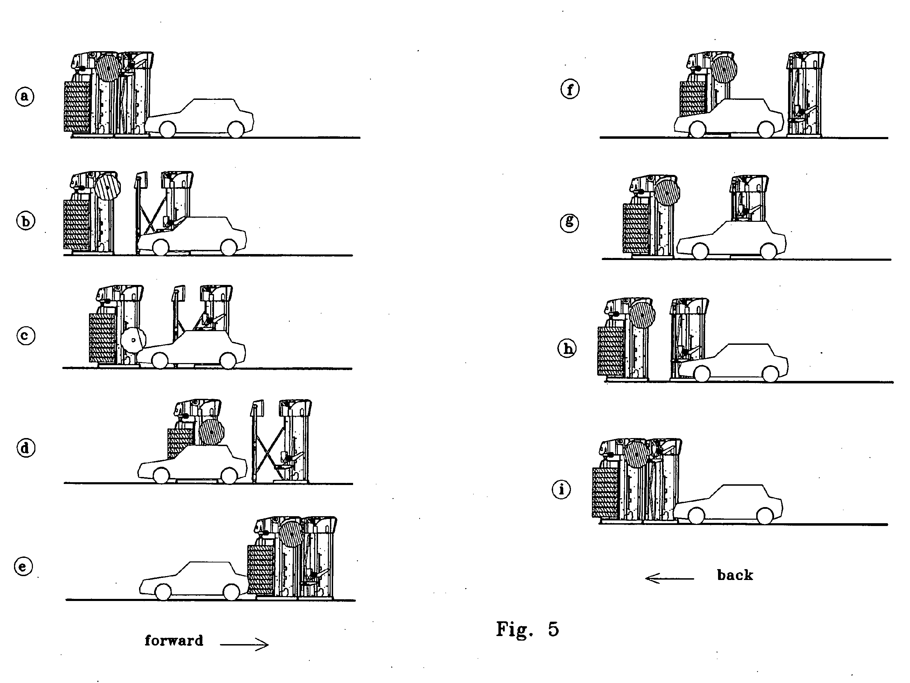

A preferred cycle of operation of the installation described is schematically illustrated in figures 4a to 4i, and involves the following stages:
forward pass
   - advance of drying gantry 1 (fig. 5a), with spraying of an emollient product and simultaneous retraction of secondary gantry 4 associated with it (fig. 5b), with scanning and storage of the vehicle contour;
   - spraying of pressurised water by gantry 4, while support 14 of the horizontal nozzles follows the vehicle contour just stored (fig. 5c);
   - advance of gantry 2, with mechanical washing performed by brushes 16 and 17 and wheel washers 15, possibly with spraying of shampoo or rinsing water (fig. 5d);
   - completion of mechanical washing and simultaneous advance of secondary gantry 3 until it comes into contact with main gantry 1;
return pass (fig. 5e):
   - completion of mechanical washing by brushes 16 and 17, possibly with rinsing and/or waxing (fig. 5f);
   - advance of drying gantry 1 (joined to secondary gantry 4), with activation of drying devices 9, 10 and 11 (figs. 5g and 5h);
   - end of washing, with all the gantries in contact with one other and in the most compact position (fig. 5i).

## Claims

1. Car wash installation of the type comprising a first gantry (1) which is split, and constituted by two parts (3, 4) connected by means which allow said parts (3, 4) to move closer together when the gantry moves in one direction and to move apart when the gantry moves in the opposite direction, wherein said first gantry (1) comprises a main motor-driven gantry (3) and a secondary gantry (4) towed by said main gantry (1), **characterised in that** a second gantry (2) is provided, fitted at least with rotary brushes for mechanical washing (16, 17), and further **characterised in that** said first gantry is fitted with drying devices (9, 10, 11)as well as means (8) for spraying an emollient, and wherein devices (13, 14) for spraying water at high pressure are fitted on said secondary gantry (4), said main gantry (3) being fitted with drying devices (9, 10, 11).

2. Car wash installation as claimed in claim 1, **characterised in that** it includes means (6, 7, 33) of connecting the two parts of the split gantry (1) which are designed to allow one of them to move separately from the other in the first section of movement in one direction, which said means constrains said two parts together when the first one has travelled a pre-determined section of the pass in question.

3. Car wash installation as claimed in claim 2, **characterised in that** it includes means (7) integral with one part of the split gantry which slide in a seating in the other part, means designed to limit said slide being fitted.

4. Car wash installation as claimed in claim 3, **characterised in that** part of the split gantry is integral with at least one element (33) that slides rigidly in a seating (34) in the other part, said rigid element or said seating being fitted with end stops (35) designed to engage a stop means integral with said seating or said rigid element.

5. Car wash installation as claimed in claim 4, **characterised in that** said rigidly sliding element is constituted by a rod (33) integral with one part (4) of said split gantry and fitted with two adjustable end stops (35), which said rod slides in a seating in the second part of said split gantry, said seating presenting a fixed stop means (36, 36') designed to be engaged by said end stops.

6. Car wash installation as claimed in claim 5, wherein said rod is fitted with an adjustable stop means (35) designed to engage two end stops present in said seating.

7. Car wash installation as claimed in any of claims 1 to 3, **characterised in that** said split gantry comprises a main gantry (3) and a secondary gantry (4) connected to said first gantry via a windable cable, and that the extent to which said cable is paid out determines the distance between said two gantries.

8. Car wash installation as claimed in any of claims 1 to 3, **characterised in that** said means connecting the two parts of the split gantry (1) are constituted by a pair of rods (6) hinged to one another at a central point, the ends of which slide and engage guides integral with said parts (3, 4), so as to form a kind of pantograph connecting said parts.

9. Car wash installation as claimed in any of claims 1 to 3, **characterised in that** said two parts (3, 4) of the split gantry (1) are connected by a telescopic arm.

10. Car washing process using an installation as claimed in any of the preceding claims, **characterised in that** it includes the following stages:
• advance of said fisrt gantry (3), with spraying of an emollient product and simultaneous retraction of the secondary gantry (4) associated with it, with scanning and storage of the contour of the vehicle;
• spraying of pressurised water by the secondary gantry (4), while the support of the horizontal nozzles follows the vehicle contour just stored;
• advance of washing gantry (2), with mechanical washing performed by brushes (16, 17) and wheel washers, possibly with spraying of shampoo or rinsing water;
• completion of mechanical washing and simultaneous advance of secondary gantry (4) until it comes into contact with the main drying gantry (3);
• completion of mechanical washing by brushes, possibly with rinsing and/or waxing;
• advance of drying gantry (3) joined to secondary gantry (4), with activation of the drying devices;
• end of washing, with all the gantries in contact with one other in the most compact position.

## Patentansprüche

1. Fahrzeugwaschanlage der Art, die ein erstes Portal (1) aufweist, das geteilt und durch zwei Teile (3, 4) gebildet ist, die durch eine Einrichtung verbunden sind, die den Teilen (3, 4) ermöglicht, sich näher aufeinander zu zu bewegen, wenn sich das Portal in einer Richtung bewegt, und sich voneinander weg zu bewegen, wenn sich das Portal in der Gegenrichtung bewegt, wobei das erste Portal (1) ein motorbetriebenes Hauptportal (3) und ein durch das Hauptportal (1) geschlepptes Nebenportal (4) aufweist, **dadurch gekennzeichnet, daß** ein zweites Portal (2) vorgesehen ist, das mindestens mit rotierenden Bürsten (16, 17) zum mechanischen Waschen ausgestattet ist, und ferner **dadurch gekennzeichnet, daß** das erste Portal mit Trockenvorrichtungen (9, 10, 11) sowie einer Einrichtung (8) zum Versprühen eines Erweichungsmittels ausgestattet ist, wobei Vorrichtungen (13, 14) zum Versprühen von Wasser mit hohem Druck am Nebenportal (4) angebaut sind, wobei das Hauptportal (3) mit Trockenvorrichtungen (9, 10, 11) ausgestattet ist.

2. Fahrzeugwaschanlage nach Anspruch 1, **dadurch gekennzeichnet, daß** sie eine Einrichtung (6, 7, 33) zum Verbinden der beiden Teile des geteilten Portals (1) aufweist, die so gestaltet sind, daß sich eines von ihnen getrennt vom anderen im ersten Teilstück der Bewegung in einer Richtung bewegen kann, wobei die Einrichtung die beiden Teile zusammenhält, wenn das erste ein vorbestimmtes Teilstück des betreffenden Durchlaufs befahren hat.

3. Fahrzeugwaschanlage nach Anspruch 2, **dadurch gekennzeichnet, daß** sie eine mit einem Teil des geteilten Portals integrale Einrichtung (7) aufweist, die in einem Sitz im anderen Teil gleitet, mit einer Einrichtung zur Begrenzung des Gleitens.

4. Fahrzeugwaschanlage nach Anspruch 3, **dadurch gekennzeichnet, daß** ein Teil des geteilten Portals mit mindestens einem Element (33) integral ist, das in einem Sitz (34) im anderen Teil starr gleitet, wobei das starre Element oder der Sitz mit Endanschlägen (35) ausgestattet sind, die so gestaltet sind, daß sie einen Eingriff mit einer Anschlageinrichtung herstellen, die mit dem Sitz oder dem starren Element integral ist.

5. Fahrzeugwaschanlage nach Anspruch 4, **dadurch gekennzeichnet, daß** das starr gleitende Element durch eine Stange (33) gebildet ist, die mit einem Teil (4) des geteilten Portals integral und mit zwei einstellbaren Endanschlägen (35) ausgestattet ist, wobei die Stange in einem Sitz im zweiten Teil des geteilten Portals gleitet, wobei der Sitz eine feste Anschlageinrichtung (36, 36') präsentiert, die so gestaltet ist, daß die Endanschläge einen Eingriff mit ihr herstellen.

6. Fahrzeugwaschanlage nach Anspruch 5, wobei die Stange mit einer einstellbaren Anschlageinrichtung (35) ausgestattet ist, die so gestaltet ist, daß sie einen Eingriff mit zwei Endanschlägen herstellt, die im Sitz vorhanden sind.

7. Fahrzeugwaschanlage nach einem der Ansprüche 1 bis 3, **dadurch gekennzeichnet, daß** das geteilte Portal ein Hauptportal (3) und ein Nebenportal (4) aufweist, das mit dem ersten Portal über ein aufrollbares Kabel verbunden ist, und daß das Ausmaß, in dem das Kabel abgerollt wird, den Abstand zwischen den beiden Portalen bestimmt.

8. Fahrzeugwaschanlage nach einem der Ansprüche 1 bis 3, **dadurch gekennzeichnet, daß** die die beiden Teile des geteilten Portals (1) verbindende Einrichtung durch ein Paar Stangen (6) gebildet ist, die an einem Mittelpunkt gelenkig miteinander verbunden sind, deren Enden in Frührungen gleiten und einen Eingriff mit diesen herstellen, die mit den Teilen (3, 4) integral sind, um so eine Art von Pantograph zu bilden, der die Teile verbindet.

9. Fahrzeugwaschanlage nach einem der Ansprüche 1 bis 3, **dadurch gekennzeichnet, daß** die beiden Teile (3, 4) des geteilten Portals (1) durch einen Teleskoparm verbunden sind.

10. Fahrzeugwaschverfahren, das eine Anlage nach einem der vorstehenden Ansprüche verwendet, **dadurch gekennzeichnet, daß** es die folgenden Stufen aufweist:
- Vorschub des ersten Portals (3) unter Versprühen eines Erweichungsprodukts und gleichzeitiger Rückzug des ihm zugeordneten Nebenportals (4) unter Abtasten und Speicherung der Kontur des Fahrzeugs;
- Versprühen von Druckwasser durch das Nebenportal (4), während der Träger der waagerechten Düsen der gerade gespeicherten Fahrzeugkontur folgt;
- Vorschub des Waschportals (2) unter mechanischem Waschen, das durch Bürsten (16, 17) und Radwaschgeräte durchgeführt wird, eventuell unter Versprühen von Shampoo oder Spülwasser;
- Abschluß des mechanischen Waschens und gleichzeitiger Vorschub des Nebenportals (4), bis es mit dem Haupttrockenportal (3) in Kontakt kommt;
- Abschluß des mechanischen Waschens durch Bürsten, eventuell unter Spülen und/oder Einwachsen;
- Vorschub des mit dem Nebenportal (4) zusammengefügten Trockenportals (3) unter Aktivierung der Trockenvorrichtungen;
- Waschende, wobei alle Portale in der kompaktesten Position miteinander in Kontakt stehen.

## Revendications

1. Installation de lavage de voiture du type comprenant un premier portique (1) qui est divisé, et constitué de deux parties (3, 4) reliées par des moyens qui permettent auxdites parties (3, 4) de s'approcher l'une de l'autre lorsque le portique se déplace dans une direction et de s'éloigner lorsque le portique se déplace dans la direction opposée, dans laquelle ledit premier portique (1) comprend un portique principal actionné par un moteur (3) et un portique secondaire (4) tracté par ledit portique principal (1), **caractérisée en ce qu'**un second portique (2) est prévu, doté au moins de balais rotatifs pour le lavage mécanique (16, 17) et en outre **caractérisée en ce que** ledit premier portique est doté de dispositifs de séchage (9, 10, 11) ainsi que de moyens (8) pour la pulvérisation d'un émollient et dans laquelle les dispositifs (13, 14) pour la pulvérisation d'eau à haute pression sont adaptés audit portique secondaire (4), ledit portique principal (3) étant doté de dispositifs de séchage (9, 10, 11).

2. Installation de lavage de voiture selon la revendication 1, **caractérisée en ce qu'**elle contient des moyens (6, 7, 33) pour relier les deux parties du portique divisé (1), qui sont conçus pour permettre à l'une d'elles de se déplacer séparément de l'autre dans une première section du mouvement dans une direction, lesdits moyens contraignant lesdites deux parties ensemble lorsque la première s'est déplacée sur une section prédéterminée du mouvement en question.

3. Installation de lavage de voiture selon la revendication 2, **caractérisée en ce qu'**elle comporte des moyens (7) faisant partie intégrante d'une partie du portique divisé qui coulisse dans un logement dans l'autre partie, des moyens conçus pour limiter ledit coulissement étant prévus.

4. Installation de lavage de voiture selon la revendication 3, **caractérisée en ce que** la partie du portique divisé fait partie intégrante d'au moins un élément (33) qui coulisse rigidement dans un logement (34) de l'autre partie, ledit élément rigide ou ledit logement étant doté de butées d'extrémité (35) conçues pour engager un moyen d'arrêt solidaire du logement ou dudit élément rigide.

5. Installation de lavage de voiture selon la revendication 4, **caractérisée en ce que** ledit élément coulissant rigidement est constitué d'une barre (33) faisant partie intégrante d'une partie (4) dudit portique divisé et doté de deux butées d'extrémité ajustables (35), laquelle barre coulisse dans un logement de la seconde partie dudit portique divisé, ledit logement présentant des moyens d'arrêt fixés (36, 36') conçus pour être engagés par lesdites butées d'extrémité.

6. Installation de lavage de voiture selon la revendication 5, dans laquelle ladite barre est dotée d'un moyen d'arrêt ajustable (35) conçu pour engager deux butées d'extrémité présentes dans ledit logement.

7. Installation de lavage de voiture selon l'une quelconque des revendications 1 à 3, **caractérisée en ce que** ledit portique divisé comprend un portique principal (3) et un portique secondaire (4) reliés au premier portique via un câble enroulable, et **en ce que** l'étendue de déroulement dudit câble détermine la distance entre lesdits deux portiques.

8. Installation de lavage de voiture selon l'une quelconque des revendications 1 à 3, **caractérisée en ce que** lesdits moyens reliant les deux parties du portique divisé (1) sont constitués d'une paire de barres (6) articulées l'une par rapport à l'autre sur un point central, dont les extrémités coulissent et engagent des guides formant partie intégrante desdites parties (3, 4) de façon à former un type de pantographe reliant lesdites parties.

9. Installation de lavage de voiture selon l'une quelconque des revendications 1 à 3, **caractérisée en ce que** lesdites deux parties (3, 4) du portique divisé (1) sont reliées par un bras télescopique.

10. Processus de lavage de voiture utilisant une installation selon l'une quelconque des revendications précédentes, **caractérisé en ce qu'**il contient les étapes suivantes :
- l'avance dudit premier portique (3) avec la pulvérisation d'un produit émollient et le recul simultané du portique secondaire (4) associé à celui-ci, avec le scannage et la mémorisation du contour du véhicule ;
- la pulvérisation d'eau sous pression par le portique secondaire (4) alors que le support des buses horizontales suit le contour du véhicule précédemment mémorisé ;
- l'avance du portique de lavage (2) avec le lavage mécanique réalisé par des balais (16, 17) et des brosses de roue, éventuellement avec la pulvérisation de shampoing ou d'eau de rinçage ;
- l'achèvement du lavage mécanique et l'avance simultanée du portique secondaire (4) jusqu'à ce qu'il entre en contact avec le portique de séchage principal (3) ;
- l'achèvement du lavage mécanique par des balais, éventuellement avec le rinçage et/ou l'encirement ;
- l'avance du portique de séchage (3) assemblé au portique secondaire (4) avec l'activation des dispositifs de séchage ;
- la fin du lavage avec tous les portiques en contact les uns avec les autres dans la position la plus compacte.
